# EUROPEAN PATENT SPECIFICATION

(11) **EP 4 206 099 B1**
(45) Date of publication and mention of the grant of the patent: **16.10.2024**
(21) Application number: 22217152.2
(22) Date of filing: 29.12.2022
(51) Int. Cl.: B65G 47/51

(54) **METHOD FOR OFFLINE BUFFERING OF FOAM CANS AND SYSTEM THEREFOR**
VERFAHREN ZUR OFFLINE-PUFFERUNG VON SCHAUMDOSEN UND SYSTEM DAFÜR
PROCÉDÉ DE STOCKAGE TAMPON HORS-LIGNE DE BOMBES AÉROSOLES À MOUSSE ET SYSTÈME CORRESPONDANT

(30) Priority: 30.12.2021 BE 202106112
(43) Date of publication of application: 05.07.2023
(73) Proprietor: Soudal N.V., 2300 Turnhout (BE)
(72) Inventor: DE CUYPER, Joren, 2300 Turnhout (BE); WILLEMS, Elias, 2300 Turnhout (BE); SLUYTS, Danny, 2300 Turnhout (BE)
(74) Representative: Brantsandpatents bv

(56) References cited:
- EP-A1- 2 233 412

## Description

### TECHNICAL FIELD

The invention relates to a system for offline buffering of foam cans.

In a second aspect, the invention also relates to a method for offline buffering of foam cans.

In another aspect, the invention also relates to a use for offline buffering of foam cans.

### PRIOR ART

Foam cans are still often used in the prior art. In the prior art, a foam can is produced as follows. A multitude of foam cans are supplied, after which they are filled with the components for forming an insulating foam. These filled foam cans are then fitted with a valve in the opening, through which the foam cans are placed under pressure by means of a propellant gas in a subsequent step. Finally, the foam cans are packaged so that they can be transported. Between the production steps it often happens that the foam cans are transferred to the next step in the process after the end of a step in the process.

This known device and method has the following drawback, that the moving often takes place manually, whereby the cans can accumulate at the end of a production step. An additional disadvantage is that it is more difficult to grip the cans due to the accumulation and these cans can be knocked over. This can cause a reaction between the components in the foam cans, with the result that there is a possibility of an explosion.

Another disadvantage is that if a problem occurs in a certain step of the production process, all previous steps and subsequent steps are also directly affected.

EP 2 233 412 describes a storage system for storing containers such as bottles or syringes comprising:
- at least one entrance and at least one exit;
- at least one transport system,
- at least one buffer zone placed next to the transport system, suitable for receiving the containers to be buffered, the buffer zone comprising at least one stand, the stand comprising several rows, the rows being staggered, and the stand with the rows facing the transport system; and
- a robot comprising a robotic arm,
wherein the transport system and the buffer zone are within reach of the robotic arm.

The disadvantage of this storage system is that a robot of the storage system has to handle all bottles or syringes that are delivered via a supply line, so that the transport system forms a bottleneck in the supply line.

The present invention aims to solve at least some of the above problems or drawbacks.

### SUMMARY OF THE INVENTION

In a first aspect, the present invention relates to a device according to claim 1.

The stepwise oriented steps of the stands have the advantage that, in addition to the rows, the buffered foam cans are also positioned stepwise. As a result, the foam cans are shifted in height between the rows, giving the foam cans more room to be gripped.

Preferred embodiments of the device are set out in claims 2-9.

A specific preferred embodiment concerns a device according to claim 5. By providing a coupling means at every place where a foam can can be placed, these can be releasably coupled to the stand. This is in fact advantageous because it is more difficult for the foam cans to be knocked over. An additional advantage of the coupling means is that the foam cans are hereby immediately positioned to be picked up again.

In a second aspect, the present invention relates to a method according to claim 10. This method has the advantage, among other things, that the foam cans on the rows of the stands are stacked stepwise, so that there is more space around the foam cans to be gripped by the robotic arm, without knocking over foam cans on lower rows.

Preferred embodiments of the method are described in the dependent claims 11-14.

In a third aspect, the present invention relates to a use according to claim 15. This use results in a buffer system where foam cans can be safely stored offline. This allows problems to be limited, where a problem in a production step does not affect all subsequent and/or previous production steps. Another advantage of the use is that the foam cans can be disconnected from the stands with less force and effort, so that they can be disconnected more quickly, and the machines used experience less wear.

### DESCRI PTI ON OF THE FIGURES

**Figure 1** shows a schematic overview representation of the system according to the present invention.
**Figure 2** shows a perspective view of an embodiment of the present invention.
**Figure 3** shows a perspective view of an embodiment of the present invention.
**Figure 4** shows a side view of an embodiment of the present invention.

### DETAILED DESCRI PTI ON

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprise", "comprising", "consist of", "consisting of", "provided with", "include", "including", "contain", "containing", are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

The term "foam can" in this text is mainly intended to mean a cylindrical container or can with an opening in the top face and a closed bottom face, the opening being closed with a valve. The foam cans are filled with an insulating foam or an adhesive foam, for example a fraction of polyol and a fraction of methylenediphenyl diisocyanate (MDI), further provided with a propellant gas.

In a first aspect, the invention relates to a system for offline buffering of foam cans. The system comprising at least one entrance and at least one exit. The system further comprises at least one conveyor belt, wherein the conveyor belt connects the entrance to the exit. Furthermore, the system comprises at least one buffer zone placed next to the conveyor belt, suitable for receiving the foam cans to be buffered. The system further comprises a robot comprising a robotic arm, wherein the conveyor belt and the buffer zone are within reach of the robotic arm. The buffer zone comprises at least one stand, the stand comprising several rows. The rows are arranged stepwise, the stand with the rows facing the conveyor belt.

Buffering the foam cans has the great advantage of buffering an excess supply of foam cans for a short period of time. As a result, the foam cans can continue to be supplied. An additional advantage is that this makes it possible to deal with problems or delays that may occur before or after the buffer system. As a result, the entire production process does not suffer from delays caused by a problem that may have occurred. An example of a delay can be when the foam cans have to be packed in another box with different dimensions and the packaging device has to be adjusted as a result. Thus, buffering allows continued production and thus continued supply.

The robot comprising the robotic arm is advantageous in that a robotic arm requires less space and, as a result, irrespective of the shape of the buffer zone, the robotic arm can be kept within the buffer zone. A robotic arm also uses fewer parts and therefore does not need, for example, a frame for moving the robotic arm, so that fewer parts experience wear, which limits maintenance and thus saves time and costs.

According to a preferred embodiment, the robotic arm comprises a plurality of grippers for gripping a plurality of foam cans. The grippers further comprise several sensors for detecting that a gripper has received a foam can and that the gripper is closed.

The grippers are coupled parallel next to each other at the movable end of the robotic arm, whereby several foam cans can be grasped for moving to the buffer zone or vice versa. Using multiple sensors in a gripper is beneficial for detecting foam cans in the grippers, allowing the system to know which spaces in the buffer zone are full, as it is known whether a gripper contained a foam can when the gripper was moved to the buffer zone. In addition, the sensors have the advantage of preventing empty grippers by, for example, adding an extra foam can from the entrance and then moving the foam cans to the buffer zone. In addition, defects can be detected with the sensors, which simplifies maintenance of the grippers.

According to a preferred embodiment, each gripper comprises several fingers for gripping a foam can around the sleeve of the foam can. Each gripper preferably comprises at least three fingers for grasping a foam can. The fingers are herein articulatedly coupled with one side to the gripper.

By using fingers, the foam cans can be grasped from above. Fingers can be easily used to pick up objects of different shapes. Furthermore, it is not necessary to grip the foam cans over the entire sleeve and the contact points can be limited, so that the fingers of adjacent grippers can be staggered and can therefore be placed closer to each other.

According to a further embodiment, the fingers are provided at one end with an anti-slip material, such as for instance rubber. This is advantageous to improve the contact resistance between the fingers and the foam cans.

According to a further embodiment, the fingers comprise a sensor for detecting whether the fingers are open or closed. This is advantageous for identifying defects and immediately finding and repairing the defective finger. In addition, in combination with the sensors in the gripper, it can be checked whether during the transport of the foam cans, the grippers are indeed holding a foam can between the fingers.

According to a preferred embodiment, each row of the stand comprises several locations for receiving a plurality of foam cans, wherein the number of locations is equal to or a multiple of the number of grippers on the robotic arm.

According to a preferred embodiment, the rows further comprise a coupling means at each location, wherein the coupling means is suitable for detachably coupling foam cans at the locations in the rows of the stands.

Because the foam cans are releasably coupled at their designated standing locations on the stands, the foam cans are always positioned correctly. As a result, the foam cans are immediately positioned and ready to be picked up again from the stands.

Because the foam cans are coupled at the standing locations on the stands, it is more difficult to knock them over.

According to a further embodiment, the coupling means is a magnet, which is arranged in a row along each row. The advantage of placing a magnet along the row is that the rows can be formed by a flat plate. Preferably, the magnets are contained in an upright foam can holder, wherein the foam can holder comprises a plurality of recesses for aligning the foam cans, wherein the recesses are positioned upright on the flat plate in a longitudinal direction and the recesses having a cross-section which is a circle segment in a direction transverse to the longitudinal direction. The placed foam cans are pulled to their intended position by the magnets and are held by the magnets. In addition, the flat plate is economical in maintenance.

According to another embodiment, the coupling means is a snap means into which the foam cans can be snapped. The advantage of the stands, which are oriented stepwise, is that the foam cans can be tilted further while being picked up without touching the foam cans of the next row. Due to the tilting, the robotic arm has to exert less force to remove the insulation cans from the coupling means. As a result, the robotic arm is less subject to wear, which saves costs and time.

According to a preferred embodiment, the system comprises a pick-up station, wherein the pick-up station comprises a centering plate and support surface, each coupled to an opposite side of the conveyor belt. The centering plate further comprises several recesses for aligning the foam cans, wherein the centering plate presses the foam cans against the support surface when actuated. The recesses are positioned in a longitudinal direction standing on the transport surface of the conveyor belt, the recesses having a cross-section which is a circle segment in a direction transverse to the longitudinal direction. The centering plate is preferably a substantially rectangular plate comprising a plurality of parallel recesses equidistantly spaced between each other. The centering plate has the option of being movably coupled to a wall or as part of a wall of the conveyor belt. Furthermore, the support surface has the option of being coupled to the conveyor belt on a side opposite the centering plate, the support surface being parallel to the plane of the centering plate.

When picking up the foam cans, a limited distance between the adjacent foam cans is necessary to enable insertion of the fingers in the grippers. This reduces the chance of knocking over neighboring foam cans. The centering plate has the option of providing this space and to ensure that this space is the same each time the centering plate is operated.

The number of recesses is predetermined and is suitable for receiving part of the sleeve of the foam cans. The provision of recesses has the advantage of guiding the foam cans to the center of the opening when the foam cans are pressed against the support surface. Through the recesses, the foam cans are brought to the center of this opening by a gradual movement, which is controlled and continuous. The use of other shapes could result in the foam cans being pushed to the center of the opening with a jerk, which is not desirable to prevent the contents from reacting in an explosive manner.

According to a further embodiment, the pick-up station comprises a stopping device for blocking a predetermined number of foam cans in the pick-up station. The pick-up station further comprises a plurality of sensors for counting a number of foam cans in the pick-up station.

The advantage of the stopping element is the possibility of clamping a number of foam cans in the pick-up station without stopping the conveyor belt. This prevents large shocks that can cause the conveyor belt to start and stop. This reduces the chance of the foam cans being knocked over.

According to a preferred embodiment, a distance between centers of circles corresponding to the circle segments of adjacent recesses is at least 60 mm and at most 70 mm. Preferably the distance is at least 62 mm, more preferably at least 64 mm, even more preferably at least 65 mm and even more preferably at least 65.5 mm. Preferably, the distance is at most 69 mm, more preferably at most 68 mm, even more preferably at most 67 mm and even more preferably at most 66.5 mm. This embodiment is advantageous for a very compact buffering of foam cans, wherein the foam cans are buffered almost against each other.

According to a preferred embodiment, the system further comprises a controller for automatically controlling the robotic arm with the grippers and the pick-up station.

By means of the sensors, the system can determine whether the entrance and exit are filled with foam cans. The controller is further capable of determining by means of the sensors in the robotic arm which locations in the buffer zone are provided with foam cans.

According to a preferred embodiment, the conveyor belts comprise plates, provided on two opposite sides of the conveyor belt in front of the system entrance, wherein the plates are coupled above the conveyor belt, and the plates forming a substantially zigzag passage for the foam cans.

The zigzag passage has the advantage of separating the foam cans before entering the system. An additional advantage is that this reduces the pressure on the stopping elements of the pick-up station, which ensures that the stopping elements have to withstand less forces and therefore have a longer life. In addition, the conveyor belt is under less stress to remain in operation.

In a second aspect, the invention relates to a method for offline buffering of foam cans, comprising the following steps:
- supplying foam cans on a conveyor belt to a buffer zone of a system equipped with an entrance and exit, wherein the buffer zone is located next to the conveyor belt,
- counting a number of incoming foam cans at the system entrance,
- checking if the system exit is free of foam cans, by means of a sensor,
- moving the foam cans from the conveyor belt to a buffer zone, using a robotic arm, if the exit is full of foam cans,
- moving the foam cans from the buffer zone to the conveyor belt, using a robotic arm, if that exit is free of foam cans,
wherein the foam cans are stacked on a stand in the buffer zone, the stand comprising several rows. The rows are arranged stepwise, the stand with the rows facing the conveyor belt.

In a first step, the foam cans are transported to a buffer zone by means of a conveyor belt. The supplied foam cans are counted until a predetermined number of foam cans is reached.

A check is then performed on the system exit to check the occupancy of the exit . This checks whether the system exit is free or blocked by foam cans. Blocked in this context means that a predetermined maximum number of foam cans is present at the system exit. Depending on the occupancy, the foam cans are moved to the buffer zone or the foam cans are fed directly to the system exit.

If the system exit is full, the supplied foam cans have nowhere to go and the production process is halted. This involves moving the foam cans from the entrance to the buffer zone.

Storing the foam cans offline in a buffer zone is advantageous for the safe storage of the foam cans. The foam cans are safe in such a situation and can therefore not be influenced by possible problems that may occur in the system. The foam cans must not be subjected to large movements as there is a possibility that the insulating foam can expand internally in the cans, which can cause the cans to explode with undesirable consequences afterwards. Offline buffering decouples the foam cans from the conveyor belt, providing them with a static buffer zone free from possible vibrations or movements.

If the exit is free and therefore contains no foam cans, the foam cans from the entrance are passed on to the system exit.

The advantage of the stands is that the rows are oriented in steps, so that the cans are also stored in steps on the different rows, so that the foam cans of a highest, at least partially filled row are accessible from a top side of the foam cans when picking them back up to move them to the system exit. This reduces the chance of neighboring foam cans being pushed over.

According to a preferred embodiment, after counting a predetermined number of foam cans at the entrance, the exit is checked for a blockage by means of a sensor, wherein the supply of foam cans is stopped in the event of a blockage and the counted foam cans are buffered, and where, in the case of an empty exit, the counted foam cans are transported to the system exit, where the supply of the foam cans is resumed after the transport.

According to an embodiment, after the foam cans have been moved from the buffer zone to the conveyor belt, for a period of at least 30 s, preferably at least 35 s, more preferably at least 40 s and even more preferably at least 45 s, no foam cans are moved from the conveyor belt to the buffer zone. This is advantageous in order to prevent foam cans from being unnecessarily moved to the buffer zone, because foam cans have just been moved from the buffer zone to the conveyor belt and the exit is therefore blocked, while these foam cans will immediately be discharged from the system.

According to a preferred embodiment, after the supply of foam cans has stopped, the counted foam cans are aligned by pressing the foam cans against a support surface with a centering plate, the aligned foam cans then being moved to the buffer zone with the robotic arm.

The advantage of blocking the entrance after feeding in a certain number of foam cans ensures that these foam cans can be aligned and positioned for subsequent pick-up without any problems. By pressing the centering plate against the foam cans, these are pushed against a support surface, as a result of which the foam cans are pushed into the openings of the centering plate. This provides an opening between the foam cans, suitable for receiving the fingers of the robotic arm.

According to a preferred embodiment, the foam cans are gripped on a top side of the foam cans for moving the foam cans from the stands to the conveyor belt of the system, wherein the foam cans are subsequently discharged from the system.

Gripping the foam cans at the top is advantageous because the stepped shape of the stands gives the robot more space to lift the foam cans from their standing locations, without knocking over foam cans from lower rows.

According to a preferred embodiment, the foam cans are first placed on a lowest, at least partially free row of the stands and the foam cans are first moved from a highest, at least partially filled row of the stands to the conveyor belt.

This embodiment is advantageous because it guarantees that the robotic arm does not touch any foam cans of a higher row when placing foam cans in the stands and when moving foam cans from the stands to the conveyor belt. Because foam cans are always placed first on the lowest, at least partially free row and are always moved first from the highest, at least partially filled row to the conveyor belt, there are no foam cans on higher rows of the stands during these moves.

According to an embodiment, foam cans are supplied to the buffer zone by means of a plurality of conveyor belts, each conveyor belt having an entrance and an exit in the buffer zone, wherein the robotic arm moves foam cans from the plurality of conveyor belts to the buffer zone and from the buffer zone to the plurality of conveyor belts, wherein a decision to move foam cans from the conveyor belt to the buffer zone or from the buffer zone to the conveyor belt is made independently for each of the conveyor belts.

This embodiment is advantageous for buffering foam cans on a plurality of conveyor belts with the aid of a single robotic arm. This embodiment is also advantageous because this is done independently for each conveyor belt, so that if a conveyor belt requires a lower supply of foam cans, for example because a machine further on is at a standstill, this will not affect other conveyor belts where a high supply is possible. In a further aspect, the invention relates to the use of a system according to the first aspect for offline buffering of foam cans In what follows, the invention is described by way of non-limiting figures illustrating the invention, and which are not intended to and should not be interpreted as limiting the scope of the invention.

### DESCRIPTION OF THE FIGURES

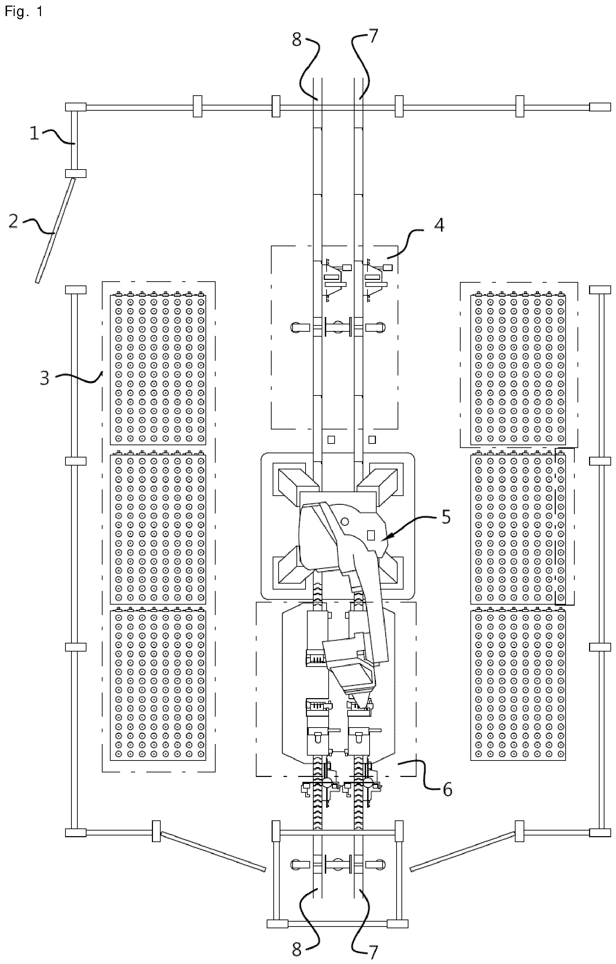

**Figure 1** shows a schematic overview representation of the system according to the present invention.

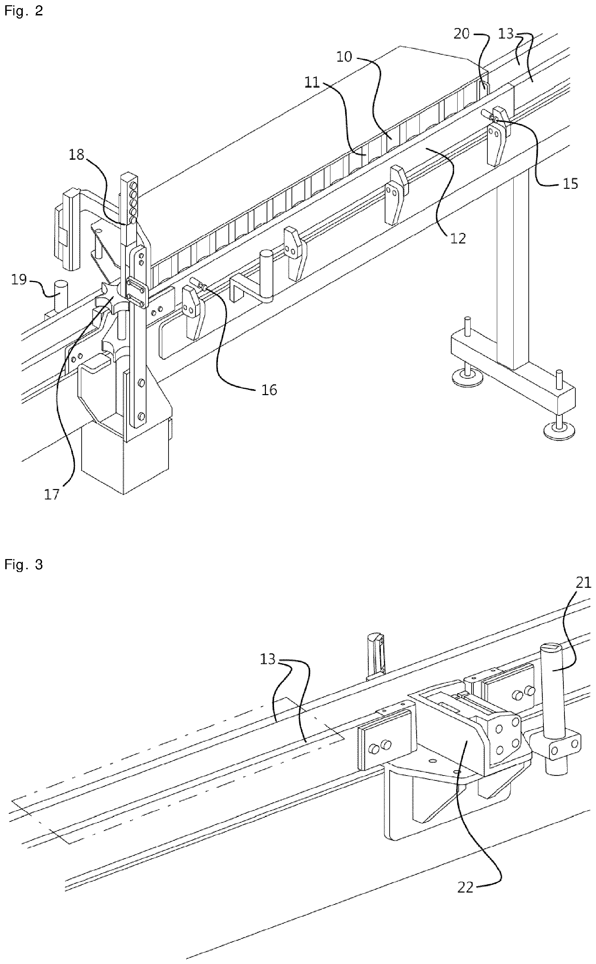

**Figure 2** shows a perspective view according to an embodiment of the present invention.
**Figure 3** shows a perspective view of an embodiment of the present invention.

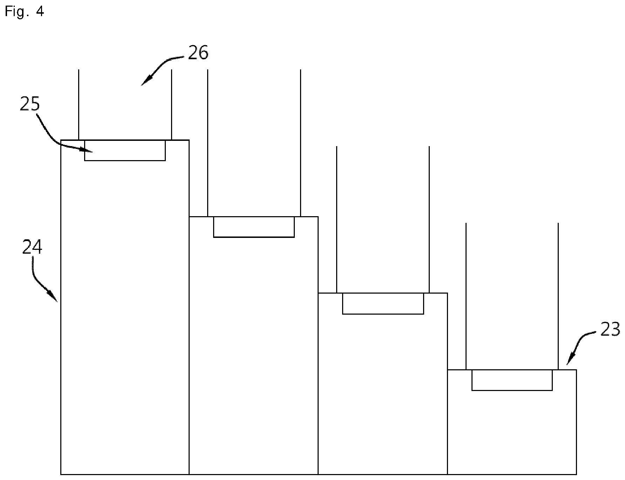

**Figure 4** shows a side view of an embodiment of the present invention.

Figure 1 shows a schematic overview representation of the system according to the present invention. Thus, two conveyor belts (7, 8) can be seen, which connect the entrance and the exit of the system. Foam cans are supplied at the entrance. The system has a pick-up station (6) positioned at the system entrance and a drop-off station (4) provided at the system exit.

The conveyor belts (7, 8) run through the pick-up (6) and drop-off station (4), so that foam cans can be transported directly from the entrance to the exit. This is advantageous because it allows the system to be ignored if no buffering of foam cans is required.

The system furthermore has a buffer zone (3) positioned on both sides of the conveyor belt. The buffer zone (3) consists of several stands (3) placed next to each other. The stands (3) are equipped with several locations for receiving foam cans. It can also be seen in Figure (1) that the buffer zone is completely disconnected from the rest of the system. This makes it impossible for movements and vibrations of the system to be passed on to the buffer zone.

The system is further provided with a robot (5) which has a robotic arm. With the robotic arm the foam cans are moved from the pick-up station (6) to the buffer zone (3), or the foam cans are moved from the buffer zone (3) to the drop-off station (4). Furthermore, the system is enclosed with a fence (1) for securing the system. The fence is also equipped with a few doors (2) that make it possible to enter the system.

In a first step, the foam cans are supplied by means of a conveyor belt to the system entrance. Upon entering the entrance, the foam cans are moved into the pick-up station (6) by conveyor belts (7, 8). The pick-up station has a centering plate (11) and a support surface (12) both being arranged as part of the wall (13) of the conveyor belt. When actuated, the centering plate (11) is moved towards the support surface, as a result of which the foam cans are pushed against the support surface by the centering plate (11). The centering plate (11) is further on the plane directed towards the support plane (12) provided with sixteen parallel recesses (10) placed next to each other and wherein an equal distance (11) is provided between the adjacent recesses (10).

When the centering plate (11) is operated, the foam cans are pushed against the support surface (12), as described above. This pushes the foam cans into the recesses (10), so that a space is created between the foam cans proportional to the distance. Furthermore, the pick-up station has several sensors (15, 16, 17, 18, 19). Sensors (15, 16, 19) can detect if a foam can is placed in front of the sensor. Sensor (17) is a counter that counts each incoming foam can. Furthermore, the height of the foam cans is checked with sensor (18). By checking the height of the cans, an extra check is carried out to see whether all incoming foam cans are the same height or are still upright. By doing so, such problems can be avoided, which increases the safety of the system.

After the foam cans enter the pick-up station, the exit is checked for foam cans. It is possible that the exit is blocked with foam cans if there is a delay in subsequent production steps, such as the packaging of the foam cans. The system exit has, as stated in Figure 1, a drop-off station (4). The drop-off station (4) can also be seen in Figure (3). The drop-off station (4) is herein provided with a sensor (21), which can detect foam cans in front of the sensor. With the sensor (21) it is possible to check whether the exit is blocked with foam cans. In addition, the drop-off station (4) is provided with a stopping element (22) which, when operated, is brought into the path of the conveyor belt which closes the system exit.

If the exit is blocked with foam cans, the supplied foam cans are buffered at the entrance and thus moved to the buffer zone (3) on the stands (3). Here a predetermined number of foam cans is counted with counter (17) in the pick-up station (6). The predetermined number of foam cans is herein equal to the number of recesses (10) of the centering plate (11). The number of foam cans in the pick-up station (6) is monitored by sensors (15, 16, 19). When the predetermined number of foam cans has been reached in the pick-up station (6), a stopping element (20) is inserted in the pick-up station, blocking the conveyor belt. The stopping element (20) hereby closes the entrance and blocks the further introduction of foam cans at the system entrance.

In a next step, the centering plate (11) is activated wherein the counted sixteen foam cans are pushed against the support surface (12). As a result, the foam cans are separated and an opening is provided between the foam cans. The foam cans are then moved to the buffer zone (3) of the system.

The system has a robotic arm (5) for moving the foam cans. The robotic arm (5) is provided with sixteen grippers arranged side by side at the movable end. Furthermore, the grippers are provided with fingers that make it possible to pick up the foam cans. The robotic arm brings the grippers with its fingers between the counted foam cans, after which the foam cans are grasped and moved to the stands (3) in the buffer zone (3). The grippers and fingers are also equipped with sensors, wherein the grippers have a sensor that can detect a foam can in the gripper. In addition, the fingers have a sensor that checks whether the fingers are open or closed. This is in fact advantageous because it is possible to check whether foam cans have indeed been placed in the grippers during transport. In addition, safety measures can be implemented whereby the foam cans are only moved when the fingers are closed and a foam can is detected in the grippers. Furthermore, problems can be found with the grippers and fingers through the use of the sensors.

As long as the exit is blocked, the above steps are repeated and the supplied foam cans are buffered.

If the system exit is free, in particular sensor (21) sees no foam cans, the supplied foam cans at the entrance are moved through the pick-up station (6) to the drop-off station (4). Moving is done by means of the conveyor belts (7, 8) that run through the pick-up station (6) and the drop-off station (4), sending the foam cans directly to the system exit.

In addition, with a free exit, the foam cans that were first buffered are moved to the drop-off station where the foam cans leave the system via the exit.

As described earlier, the buffer zone (3) is provided with stands (3) as can be seen in Figure 4, which shows a side view of a stand (3). The stand (3) is equipped with several steps (23) wherein the steps contain several standing locations on which foam cans are placed. The various steps (23) are supported by means of a base (24). The steps (23) are staggered relative to each other. This is in fact advantageous because the foam cans are spaced apart in height relative to the next row. This allows the foam cans to be gripped at the top by the robotic arm (5), without knocking over foam cans on lower rows.

The stand has a coupling device (25) for each standing location, wherein the coupling means (25) in Figure 4 is a magnetic disc (25) located below the foam cans' standing location. As a result, the placed foam cans are attracted to the standing location and secured. This is very advantageous because the foam cans are always positioned correctly to be picked up again. In addition, the foam cans are detachably coupled to the standing locations, which reduces the risk of the foam cans being knocked over in the stands.

## Claims

1. System for offline buffering of foam cans comprising at least one entrance and at least one exit; at least one conveyor belt (7, 8), wherein the conveyor belt (7, 8) connects the entrance to the exit; at least one buffer zone (3) placed next to the conveyor belt (7, 8), suitable for receiving the foam cans to be buffered; and a robot (5) comprising a robotic arm, wherein the conveyor belt (7, 8) and the buffer zone (3) are within reach of the robotic arm, wherein the buffer zone (3) comprises at least one stand, the stand comprising several rows, the rows being staggered, and the stand with the rows facing the conveyor belt (7, 8).

2. System according to claim 1, **characterized in that** the robotic arm comprises a plurality of grippers for gripping a plurality of foam cans, further comprising a plurality of sensors for detecting that a gripper has received a foam can and that the gripper is closed.

3. System as claimed in claim 2, **characterized in that** each gripper comprises several fingers for gripping a foam can around a sleeve of the foam can.

4. System according to any of the preceding claims 1-3, **characterized in that** each row of the stand comprises several locations for receiving a plurality of foam cans, wherein the number of locations is equal to or a multiple of the number of grippers on the robotic arm.

5. System according to claim 4, **characterized in that** the rows further comprise a coupling means (25) at each location, wherein the coupling means (25) is suitable for releasably coupling foam cans at the locations in the rows of the stands.

6. System according to any of the preceding claims 1-5, **characterized in that** the system comprises a pick-up station (6), the pick-up station (6) comprising a centering plate (11) and support surface (12), each coupled to an opposite side of the conveyor belt (7, 8), the centering plate (11) further comprising a plurality of recesses (10) for aligning the foam cans, wherein the centering plate (11) presses the foam cans against the support surface (12) when actuated, and the recesses (10) being positioned in a longitudinal direction standing on the transport surface of the conveyor belt (7, 8), the recesses (10) having a cross-section which is a circle segment in a direction transverse to the longitudinal direction.

7. System according to claim 6, **characterized in that** a distance between centers of circles corresponding to the circle segments of adjacent recesses (10) is at least 60 mm and at most 70 mm.

8. System according to any of the preceding claims 1-7, further comprising a controller for automatically controlling the robotic arm with the grippers and the pick-up station (6).

9. System according to any of the preceding claims 1-8, **characterized in that** conveyor belts (7, 8) comprise plates provided on two opposite sides of the conveyor belt (7, 8) in front of the system entrance, wherein the plates are coupled above the conveyor belt (7, 8), and the plates forming a substantially zigzag passage for the foam cans.

10. Method for offline buffering of foam cans, comprising the following steps:
- supplying foam cans on a conveyor belt (7, 8) to a buffer zone (3) of a system equipped with an entrance and exit, wherein the buffer zone (3) is located next to the conveyor belt (7, 8),
- counting a number of incoming foam cans at the system entrance,
- checking if the system exit is free of foam cans, by means of a sensor (21),
- moving the foam cans from the conveyor belt (7, 8) to a buffer zone (3), using a robotic arm, if the exit is full of foam cans,
- moving the foam cans from the buffer zone (3) to the conveyor belt (7, 8), using a robotic arm, if that exit is free of foam cans,
wherein the foam cans are stacked on a stand in the buffer zone (3), the stand comprising several rows, the rows being staggered, and the stand with the rows facing the conveyor belt.

11. Method according to claim 10, **characterized in that** after counting a predetermined number of foam cans at the entrance, the exit is checked for a blockage by means of a sensor (21), wherein the supply of foam cans is stopped in the event of a blockage and the counted foam cans are buffered, and where, in the case of an empty exit, the counted foam cans are transported to the system exit, where the supply of the foam cans is resumed after the transport.

12. Method according to claim 11, **characterized in that** after the supply of foam cans has stopped, the counted foam cans are aligned by pressing the foam cans against a support surface (12) with a centering plate (11), the aligned foam cans then being moved to the buffer zone (3) with the robotic arm.

13. Method according to any of the preceding claims 10-12, **characterized in that** the foam cans are gripped on a top side of the foam cans for moving the foam cans from the stands to the conveyor belt (7, 8) of the system, wherein the foam cans are subsequently discharged from the system.

14. Method according to any of the preceding claims 10-13, **characterized in that** the foam cans are first placed on a lowest, at least partially free row of the stands and that the foam cans are first moved from a highest, at least partially filled row of the stands to the conveyor belt.

15. Use of a system according to any of claims 1-9 for offline buffering of foam cans.

## Patentansprüche

1. System zum Offline-Puffern von Schaumsprühdosen, umfassend mindestens einen Eingang und mindestens einen Ausgang, mindestens ein Förderband (7, 8), wobei das Förderband (7, 8) den Eingang mit dem Ausgang verbindet, mindestens eine Pufferzone (3), die neben dem Förderband (7, 8) platziert und dazu geeignet ist, die zu puffernden Schaumsprühdosen aufzunehmen, und einen Roboter (5), der einen Roboterarm umfasst, wobei das Förderband (7, 8) und die Pufferzone (3) in Reichweite des Roboterarms liegen, wobei die Pufferzone (3) mindestens ein Gestell umfasst, das Gestell mehrere Reihen umfasst, die Reihen gestaffelt sind und das Gestell mit den Reihen zum Förderband (7, 8) weist.

2. System nach Anspruch 1, **dadurch gekennzeichnet, dass** der Roboterarm mehrere Greifer zum Ergreifen mehrerer Schaumsprühdosen umfasst, ferner mehrere Sensoren zum Erkennen, dass der Greifern eine Schaumsprühdose aufgenommen hat und dass der Greifer geschlossen ist, umfassend.

3. System nach Anspruch 2, **dadurch gekennzeichnet, dass** jeder Greifer mehrere Finger zum Ergreifen einer Schaumsprühdose um eine Hülse der Schaumsprühdose herum umfasst.

4. System nach einem der Ansprüche 1 bis 3, **dadurch gekennzeichnet, dass** jede Reihe des Gestells mehrere Stellen zum Aufnehmen mehrerer Schaumsprühdosen umfasst, wobei die Anzahl der Stellen gleich oder ein Vielfaches der Anzahl der Greifer an dem Roboterarm ist.

5. System nach Anspruch 4, **dadurch gekennzeichnet, dass** die Reihen ferner ein Kopplungsmittel (25) an jeder Stelle umfassen, wobei das Kopplungsmittel (25) dazu geeignet ist, Schaumsprühdosen an den Stellen in den Reihen des Gestells lösbar zu koppeln.

6. System nach einem der Ansprüche 1 bis 5, **dadurch gekennzeichnet, dass** das System eine Aufnahmestation (6) umfasst, wobei die Aufnahmestation (6) eine Zentrierungsplatte (11) und eine Stützfläche (12) umfasst, die jeweils an eine von gegenüberliegenden Seiten des Förderbandes (7, 8) gekoppelt sind, wobei die Zentrierungsplatte (11) ferner mehrere Vertiefungen (10) zum Ausrichten der Schaumsprühdosen umfasst, wobei die Zentrierungsplatte (11) die Schaumsprühdosen gegen die Stützfläche (12) presst, wenn sie betätigt wird, und die Vertiefungen (10) in einer Längsrichtung auf der Transportfläche des Förderbandes (7, 8) stehend positioniert sind, wobei die Vertiefungen (10) einen Querschnitt aufweisen, der in einer Richtung quer zu der Längsrichtung ein Kreissegment ist.

7. System nach Anspruch 6, **dadurch gekennzeichnet, dass** ein Abstand zwischen Mittelpunkten von Kreisen, die den Kreissegmenten benachbarter Vertiefungen (10) entsprechen, mindestens 60 mm und höchstens 70 mm beträgt.

8. System nach einem der Ansprüche 1 bis 7, ferner eine Steuerung zum automatischen Steuern des Roboterarms mit den Greifern und der Aufnahmestation (6) umfassend.

9. System nach einem der Ansprüche 1 bis 8, **dadurch gekennzeichnet, dass** Förderbänder (7, 8) Platten umfassen, die an zwei gegenüberliegenden Seiten des Förderbandes (7, 8) vor dem Systemeingang bereitgestellt sind, wobei die Platten über dem Förderband (7, 8) gekoppelt sind und die Platten einen im Wesentlichen zickzackförmigen Durchlass für die Schaumsprühdosen bilden.

10. Verfahren zum Offline-Puffern von Schaumsprühdosen, die folgenden Schritte umfassend:
- Führen von Schaumsprühdosen auf einem Förderband (7, 8) zu einer Pufferzone (3) eines Systems, das mit einem Eingang und einem Ausgang versehen ist, wobei sich die Pufferzone (3) neben dem Förderband (7, 8) befindet,
- Abzählen einer Anzahl eingehender Schaumsprühdosen an dem Systemeingang,
- Prüfen, ob der Systemausgang frei von Schaumsprühdosen ist, mittels eines Sensors (21),
- Bewegen der Schaumsprühdosen von dem Förderband (7, 8) zu einer Pufferzone (3) mit Hilfe eines Roboterarms, wenn der Ausgang voller Schaumsprühdosen ist,
- Bewegen der Schaumsprühdosen aus der Pufferzone (3) zu dem Förderband (7, 8) mit Hilfe eines Roboterarms, wenn der Ausgang frei von Schaumsprühdosen ist,
wobei die Schaumsprühdosen auf ein Gestell in der Pufferzone (3) gestapelt werden, wobei das Gestell mehrere Reihen umfasst, die Reihen gestaffelt sind und das Gestell mit den Reihen zu dem Förderband weist.

11. Verfahren nach Anspruch 11, **dadurch gekennzeichnet, dass** nach dem Abzählen einer festgelegten Anzahl an Schaumsprühdosen an dem Eingang der Ausgang mittels eines Sensors (21) auf eine Blockierung überprüft wird, wobei das Zuführen von Schaumsprühdosen im Falle einer Blockierung unterbrochen wird und die abgezählten Schaumsprühdosen gepuffert werden, und wobei die abgezählten Schaumsprühdosen im Falle eines leeren Ausgangs zu dem Systemausgang transportiert werden, wobei die Zufuhr der Schaumsprühdosen nach dem Transport wieder aufgenommen wird.

12. Verfahren nach Anspruch 11, **dadurch gekennzeichnet, dass** die abgezählten Schaumsprühdosen nach dem Unterbrechen der Zufuhr von Schaumsprühdosen ausgerichtet werden, indem die Schaumsprühdosen mit einer Zentrierungsplatte (11) gegen eine Stützfläche (12) gepresst werden, wobei die ausgerichteten Schaumsprühdosen dann mit dem Roboterarm zu der Pufferzone (3) bewegt werden.

13. Verfahren nach einem der Ansprüche 10 bis 12, **dadurch gekennzeichnet, dass** die Schaumsprühdosen an einer Oberseite der Schaumsprühdosen ergriffen werden, um die Schaumsprühdosen von den Gestellen zu dem Förderband (7, 8) des Systems zu bewegen, wobei die Schaumsprühdosen danach aus dem System ausgestoßen werden.

14. Verfahren nach einem der Ansprüche 10 bis 13, **dadurch gekennzeichnet, dass** die Schaumsprühdosen zuerst in einer untersten, zumindest teilweise freien Reihe der Gestelle platziert werden und dass die Schaumsprühdosen zuerst von einer höchsten, zumindest teilweise gefüllten Reihe der Gestelle zu dem Förderband bewegt werden.

15. Verwendung eines Systems nach einem der Ansprüche 1 bis 9 zum Offline-Puffern von Schaumsprühdosen.

## Revendications

1. Système de mise en tampon hors ligne de bombes aérosols comprenant au moins une entrée et au moins une sortie ; au moins une bande transporteuse (7, 8), dans lequel la bande transporteuse (7, 8) relie l'entrée à la sortie ; au moins une zone tampon (3) placée à côté de la bande transporteuse (7, 8), appropriée pour recevoir les bombes aérosols à mettre en tampon ; et un robot (5) comprenant un bras robotique, dans lequel la bande transporteuse (7, 8) et la zone tampon (3) sont à portée du bras robotique, **dans lequel** la zone tampon (3) comprend au moins un socle, le socle comprenant plusieurs rangées, les rangées étant en quinconce, et le socle comportant les rangées étant face à la bande transporteuse (7, 8).

2. Système selon la revendication 1, **caractérisé en ce que** le bras robotique comprend une pluralité de pinces pour saisir une pluralité de bombes aérosols, comprenant en outre une pluralité de capteurs pour détecter qu'une pince a reçu une bombe aérosol et que la pince est fermée.

3. Système selon la revendication 2, **caractérisé en ce que** chaque pince comprend plusieurs doigts pour saisir une bombe aérosol autour d'un manchon de la bombe aérosol.

4. Système selon l'une quelconque des revendications précédentes 1 à 3, **caractérisé en ce que** chaque rangée du socle comprend plusieurs emplacements pour recevoir une pluralité de bombes aérosols, dans lequel le nombre d'emplacements est égal au nombre de pinces sur le bras robotique ou est un multiple de celui-ci.

5. Système selon la revendication 4, **caractérisé en ce que** les rangées comprennent en outre un moyen de couplage (25) au niveau de chaque emplacement, dans lequel le moyen de couplage (25) est approprié pour coupler de manière amovible des bombes aérosols au niveau des emplacements dans les rangées des socles.

6. Système selon l'une quelconque des revendications précédentes 1 à 5, **caractérisé en ce que** le système comprend une station de prélèvement (6), la station de prélèvement (6) comprenant une plaque de centrage (11) et une surface de support (12), chacune couplée à un côté opposé de la bande transporteuse (7, 8), la plaque de centrage (11) comprenant en outre une pluralité d'évidements (10) pour aligner les bombes aérosols, dans lequel la plaque de centrage (11) presse les bombes aérosols contre la surface de support (12) lorsqu'elle est actionnée, et les évidements (10) étant positionnés dans une direction longitudinale se dressant sur la surface de transport de la bande transporteuse (7, 8), les évidements (10) présentant une section transversale qui est un segment de cercle dans une direction transversale à la direction longitudinale.

7. Système selon la revendication 6, **caractérisé en ce qu'**une distance entre les centres de cercles correspondant aux segments de cercle d'évidements (10) adjacents est d'au moins 60 mm et d'au plus 70 mm.

8. Système selon l'une quelconque des revendications précédentes 1 à 7, comprenant en outre un dispositif de commande pour commander automatiquement le bras robotique avec les pinces et la station de prélèvement (6).

9. Système selon l'une quelconque des revendications précédentes 1 à 8, **caractérisé en ce que** les bandes transporteuses (7, 8) comprennent des plaques prévues sur deux côtés opposés de la bande transporteuse (7, 8) devant l'entrée du système, dans lequel les plaques sont couplées au-dessus de la bande transporteuse (7, 8), et les plaques formant un passage sensiblement en zigzag pour les bombes aérosols.

10. Procédé de mise en tampon hors ligne de bombes aérosols, comprenant les étapes suivantes :
- fourniture de bombes aérosols sur une bande transporteuse (7, 8) vers une zone tampon (3) d'un système équipé d'une entrée et d'une sortie, dans lequel la zone tampon (3) est située à côté de la bande transporteuse (7, 8),
- comptage d'un nombre de bombes aérosols entrantes au niveau de l'entrée du système,
- vérification établissant si la sortie du système est exempte de bombes aérosols, au moyen d'un capteur (21),
- déplacement des bombes aérosols de la bande transporteuse (7, 8) à une zone tampon (3), en utilisant un bras robotique, si la sortie est pleine de bombes aérosols,
- déplacement des bombes aérosols de la zone tampon (3) à la bande transporteuse (7, 8), en utilisant un bras robotique, si cette sortie est exempte de bombes aérosols,
**dans lequel** les bombes aérosols sont empilées sur un socle dans la zone tampon (3), le socle comprenant plusieurs rangées, les rangées étant en quinconce, et le socle comportant les rangées étant face à la bande transporteuse.

11. Procédé selon la revendication 10, **caractérisé en ce qu'**après comptage d'un nombre prédéterminé de bombes aérosols au niveau de l'entrée, la sortie est vérifiée pour déceler un blocage au moyen d'un capteur (21), dans lequel la fourniture de bombes aérosols est arrêtée en cas de blocage et les bombes aérosols comptées sont mises en tampon, et où, en cas de sortie vide, les bombes aérosols comptées sont transportées vers la sortie du système, où la fourniture des bombes aérosols est reprise après le transport.

12. Procédé selon la revendication 11, **caractérisé en ce qu'**après que la fourniture de bombes aérosols est arrêtée, les bombes aérosols comptées sont alignées en pressant les bombes aérosols contre une surface de support (12) avec une plaque de centrage (11), les bombes aérosols alignées étant alors déplacées vers la zone tampon (3) avec le bras robotique.

13. Procédé selon l'une quelconque des revendications précédentes 10 à 12, **caractérisé en ce que** les bombes aérosols sont saisies sur un côté supérieur des bombes aérosols pour un déplacement des bombes aérosols des socles à la bande transporteuse (7, 8) du système, dans lequel les bombes aérosols sont ensuite évacuées du système.

14. Procédé selon l'une quelconque des revendications précédentes 10 à 13, **caractérisé en ce que** les bombes aérosols sont tout d'abord placées sur une rangée la plus basse, au moins partiellement libre des socles et **en ce que** les bombes aérosols sont tout d'abord déplacées d'une rangée la plus haute, au moins partiellement remplie des socles à la bande transporteuse.

15. Utilisation d'un système selon l'une quelconque des revendications 1 à 9 pour la mise en tampon hors ligne de bombes aérosols.
